(19)

Europäisches
Patentamt

European
Patent Office

Office européen
des brevets

(11) **EP 4 668 047 A1**

(12) **EUROPEAN PATENT APPLICATION**

(43) Date of publication:
24.12.2025 Bulletin 2025/52

(21) Application number: 24182609.8

(22) Date of filing: 17.06.2024

(51) International Patent Classification (IPC):
**G05D 23/13** (2006.01)   **F25B 1/00** (2006.01)
**H01M 8/00** (2016.01)

(52) Cooperative Patent Classification (CPC):
**G05D 23/1393; H01M 8/04007; H01M 8/04029;
H01M 8/04358**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **LEMAITRE, Guillaume**
**413 20 GÖTEBORG (SE)**
• **NEILSON, Rohan**
**721 31 VÄSTERÅS (SE)**

(74) Representative: **Ström & Gulliksson AB**
**P.O. Box 4188**
**203 13 Malmö (SE)**

(54) **FLUID COOLING SYSTEM**

(57)   A fluid cooling system for cooling a fuel cell system is provided, comprising processing circuitry, a fluid valve for controlling a flow ratio between a first input port of the fluid valve and a second input port of the fluid valve to provide a predetermined wanted output temperature at an output port of the fluid valve. The processing circuitry is configured to repeatedly: obtain a first input temperature at the first input port and a second input temperature at the second input port; determine an open loop flow ratio based on the first input temperature and the second input temperature; obtain an output temperature at the output port; determine a corrective closed loop flow ratio based on the output temperature and the predetermined wanted output temperature; combine the open loop flow ratio and the corrective closed loop flow ratio to provide a combined flow ratio; and control a position of the fluid valve based on the combined flow ratio.

FIG. 2

Processed by Luminess, 75001 PARIS (FR)

EP 4 668 047 A1

## Description

### TECHNICAL FIELD

The disclosure relates generally to temperature regulation. In particular aspects, the disclosure relates to a fluid cooling system. The disclosure can be applied to automotive applications, e.g. heavy-duty vehicles, such as trucks, buses, and construction equipment, among other vehicle types. Although the disclosure may be described with respect to a particular vehicle, the disclosure is not restricted to any particular vehicle. More generally, the disclosure can be applied to any piece of equipment comprising a fluid cooling system. Examples of such pieces of equipment include - but are not limited to - land vehicles (e.g., heavy-duty vehicles), marine vehicles (e.g., boats), aerial/space vehicles (e.g., drones), construction equipment appliances (e.g., excavators), mobile or stationary industrial appliances (e.g., robots), energy distribution network stations, etc.

### BACKGROUND

In various technical areas there is a need for accurate temperature regulation, especially in systems involving circulation of cooling fluid. As an example, the liquid coolant fed into the inlet of a fuel cell system needs to be strictly regulated at a given temperature in order to ensure the best compromise between efficiency and durability.

A 3-way valve is commonly used to regulate coolant temperature of fuel cell systems. One of the two valve inlets is connected to some sort of cooling radiator, while the other inlet receives the uncooled coolant from the outlet of the fuel cell system. The valve outlet is in turn connected to the inlet of the fuel cell system.

The amplitudes of the coolant temperatures on the cold and hot inlets can be extremely high while the outlet temperature must be maintained within a very narrow band around the set point. As an example, in fuel cell systems desired temperature control within the range of +/- 2°C is common.

The effect, on the outlet temperature, of moving the valve by 5% if cold and hot inlet temperatures differ only by 5°C will be relative small. However, the same movement of the valve will result in a much greater change of the outlet temperature if the cold inlet temperature is 50°C colder that the hot inlet temperature. In fuel cell system, where high temperature differences are occurring frequently, temperature regulation is therefore very hard.

It is very common to install a temperature sensor on the outlet of the valve and use a feedback control, trying to regulate the measured temperature by adjusting the 3-way valve position. The performance of such a controller is not sufficient and usually does not meet the requirements of the fuel cell system. The main problem is that the action of the feedback controller is very different depending how far apart the hot and cold inlet temperatures are from each other.

In view of the above, there is a need for improvements in fluid cooling systems.

### SUMMARY

According to a first aspect of the disclosure, a fluid cooling system for cooling a fuel cell system is provided. The fluid cooling system comprises processing circuitry, a fluid valve arranged to control the mixing of fluid, also called flow ratio, between a first input port of the fluid valve and a second input port of the fluid valve to provide a predetermined wanted output temperature at an output port of the fluid valve for connection to the fuel cell system, wherein the processing circuitry is configured to repeatedly: obtain a first input temperature at the first input port and a second input temperature at the second input port; determine an open loop flow ratio between the first input port and the second input port based on the first input temperature and the second input temperature to provide the predetermined wanted output temperature at the output port; obtain an output temperature at the output port; determine a corrective closed loop flow ratio based on the output temperature and the predetermined wanted output temperature; combine the open loop flow ratio and the corrective closed loop flow ratio to provide a combined flow ratio; and control a position of the fluid valve based on the combined flow ratio. The first aspect of the disclosure may seek to improve the accuracy of temperature regulation especially for fuel cell systems. A technical benefit may include allowing fine tuning of the valve position in order to achieve the desired outlet temperature.

Optionally in some examples, including in at least one preferred example, the processing circuitry is further configured to provide the combined flow ratio by being configured to sum up the open loop flow ratio and the corrective closed loop flow ratio. A technical benefit may include an efficient and simple combination of the open loop flow ratio and the corrective closed loop flow ratio.

Optionally in some examples, including in at least one preferred example, the open loop flow ratio is greater than the closed loop flow ratio such that the corrective closed loop flow ratio provides fine-tuning to the output temperature. A technical benefit may include a fast initial control of the valve.

Optionally in some examples, including in at least one preferred example, the corrective closed loop flow ratio is determined by a PID controller of the processing circuitry. A technical benefit may include simple implementation.

Optionally in some examples, including in at least one preferred example, the fluid cooling system further comprises a fluid pump arranged to control a flow rate of cooling fluid through the fuel cell system. A technical benefit may include more intelligent and robust control of the temperature, as also the total flow can be controlled using the fluid pump.

Optionally in some examples, including in at least one preferred example, the processing circuitry is configured to control the fluid pump to provide a configurable flow rate. A technical benefit may include a more accurate temperature control.

Optionally in some examples, including in at least one preferred example, the processing circuitry is further configured to: linearize the combined flow ratio based on a predetermined linearization map of the fluid valve to provide a linearized flow ratio; and control the position of the fluid valve based on the linearized flow ratio. A technical benefit may include efficient conversion of the flow ratio to the desired valve position.

Optionally in some examples, including in at least one preferred example, the linearization map maps flow ratio to valve position. A technical benefit may include fast and simple conversion to valve position.

Optionally in some examples, including in at least one preferred example, the linearization map comprises at least three dimensions and further maps flow rate to valve position. A technical benefit may include more detailed control, as further parameters, such as total flow, may be used for temperature regulation.

Optionally in some examples, including in at least one preferred example, the output temperature is provided by an output temperature sensor of the fluid cooling system located at the output port of the fluid valve. A technical benefit may include a very compact implementation of the fluid cooling system and the associated temperature control.

Optionally in some examples, including in at least one preferred example, the first input temperature is provided by a first input temperature sensor of the fluid cooling system located at the first input port of the fluid valve. Optionally, the second input temperature is provided by a second input temperature sensor of the fluid cooling system ocated at the second input port of the fluid valve. A technical benefit may include a very compact implementation of the fluid cooling system and the associated temperature control.

Optionally in some examples, including in at least one preferred example, the first input port is an input port for a first fluid supply and the second input port is an input port for a second fluid supply, wherein the first fluid supply has lower temperature than the second fluid supply. A technical benefit may include simple implementation in a fuel cell system.

Optionally in some examples, including in at least one preferred example, the processing circuitry is further configured to provide the combined flow ratio by being configured to sum up the open loop flow ratio and the corrective closed loop flow ratio, wherein the open loop flow ratio is greater than the closed loop flow ratio such that the corrective closed loop flow ratio provides fine-tuning to the output temperature, wherein the corrective closed loop flow ratio is determined by a PID controller of the processing circuitry, wherein the fluid cooling system further comprises a fluid pump arranged to control a flow rate of cooling fluid through the fuel cell system, wherein the processing circuitry is configured to control the fluid pump to provide a configurable flow rate, wherein the processing circuitry is further configured to: linearize the combined flow ratio based on a predetermined linearization map of the fluid valve to provide a linearized flow ratio; and control the position of the fluid valve based on the linearized flow ratio, wherein the linearization map maps flow ratio to valve position, wherein the linearization map comprises at least three dimensions and further maps flow rate to valve position, wherein the output temperature is provided by an output temperature sensor of the fluid cooling system located at the output port of the fluid valve, wherein the first input temperature is provided by a first input temperature sensor of the fluid cooling system located at the first input port of the fluid valve and/or wherein the second input temperature is provided by a second input temperature sensor of the fluid cooling system located at the second input port of the fluid valve, wherein the first input port is an input port for a first fluid supply and the second input port is an input port for a second fluid supply, wherein the first fluid supply has lower temperature than the second fluid supply, wherein the processing circuitry is further configured to change the position of the fluid valve when the obtained output temperature differs from the predetermined wanted output temperature. A technical benefit may include automated and continuous temperature regulation.

According to a second aspect of the disclosure, a vehicle is provided. The vehicle comprises a fuel cell system and the fluid cooling system of the first aspect arranged to control a temperature of the fuel cell system. The second aspect of the disclosure may seek to improve the accuracy of temperature regulation especially for vehicles equipped with fuel cell systems. A technical benefit may include allowing fine tuning of the valve position in order to achieve the desired outlet temperature, and thereby improve the efficiency and performance of the vehicle.

Optionally in some examples, including in at least one preferred example, the vehicle is a heavy-duty vehicle. A technical benefit may include improved driving performance, which in turn reduces the environmental impact of heavy duty vehicle traffic.

According to a third aspect of the disclosure, a computer implemented method for controlling a fluid cooling system arranged to cool a fuel cell system is provided. The cooling system is operatively connected to processing circuitry of a computer system and comprises a fluid valve arranged to control a flow ratio between a first a first input port of the fluid valve and a second input port of the fluid valve to provide a predetermined wanted output temperature at an output port of the fluid valve connected to the fuel cell system, wherein the method comprises repeatedly: obtaining, by the processing circuitry, a first input temperature at the first input port and a second input temperature at the second input port;

determining, by the processing circuitry, an open loop flow ratio between the first input port and the second input port based on the first input temperature and the second input temperature to provide the predetermined wanted output temperature at the output port; obtaining, by the processing circuitry, an output temperature at the output port; determining, by the processing circuitry, a corrective closed loop flow ratio based on the output temperature and the predetermined wanted output temperature; combining, by the processing circuitry, the open loop flow ratio and the corrective closed loop flow ratio to provide a combined flow ratio; and controlling, by the processing circuitry, a position of the fluid valve based on the combined flow ratio. The third aspect of the disclosure may seek to improve the accuracy of temperature regulation especially for fuel cell systems. A technical benefit may include allowing fine tuning of the valve position in order to achieve the desired outlet temperature.

Optionally in some examples, including in at least one preferred example, the method further comprises providing the combined flow ratio by summing up, by the processing circuitry, the open loop flow ratio and the corrective closed loop flow ratio. A technical benefit may include an efficient and simple combination of the open loop flow ratio and the corrective closed loop flow ratio.

Optionally in some examples, including in at least one preferred example, the method further comprises: linearizing, by the processing circuitry, the combined flow ratio based on a predetermined linearization map of the fluid valve to provide a linearized flow ratio; and controlling the position of the fluid valve based on the linearized flow ratio. A technical benefit may include efficient conversion of the flow ratio to the desired valve position.

According to a fourth aspect of the disclosure, a computer program product is provided. The computer program product comprises program code for performing, when executed by processing circuitry, the computer implemented method of the third aspect. The fourth aspect of the disclosure may seek to improve the accuracy of temperature regulation especially for fuel cell systems. A technical benefit may include allowing fine tuning of the valve position in order to achieve the desired outlet temperature.

According to a fifth aspect of the disclosure, a non-transitory computer-readable storage medium is provided. The non-transitory computer-readable storage medium comprises instructions, which when executed by processing circuitry, cause the processing circuitry to perform the computer implemented method of the third aspect. The fifth aspect of the disclosure may seek to improve the accuracy of temperature regulation especially for fuel cell systems. A technical benefit may include allowing fine tuning of the valve position in order to achieve the desired outlet temperature.

The fourth and/or fifth aspect of the disclosure may seek to convey program code for performing, when executed by processing circuitry, the computer implemented method of the third aspect. A technical benefit may include that a new vehicle and/or a legacy vehicle may be conveniently configured, by software installation/update, to allow fine tuning of the valve position in order to achieve the desired outlet temperature.

According to a further aspect, a computer system is provided. The computer system comprises processing circuitry configured to repeatedly: obtain a first input temperature at a first input port and a second input temperature at a second input port of a fluid valve arranged to control a flow ratio between the first input port of the fluid valve and the second input port of the fluid valve to provide a predetermined wanted output temperature at an output port of the fluid valve. Said fluid valve forms part a fluid cooling system for cooling a fuel cell system. The processing circuitry is further configured to repeatedly determine an open loop flow ratio between the first input port and the second input port based on the first input temperature and the second input temperature to provide the predetermined wanted output temperature at the output port; obtain an output temperature at the output port; determine a corrective closed loop flow ratio based on the output temperature and the predetermined wanted output temperature; combine the open loop flow ratio and the corrective closed loop flow ratio to provide a combined flow ratio; and control a position of the fluid valve based on the combined flow ratio.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary side view of a vehicle according to an example.
FIG. 2 is an exemplary circuit of a fluid cooling system according to an example.
FIG. 3 is an exemplary diagram of a fluid cooling system according to an example.
FIG. 4 is an exemplary system diagram of a fluid cooling control system according to an example.

**FIG. 5** is a flow chart of a method of fluid cooling according to an example.

**FIG. 6** is an exemplary diagram of a computer program product according to an example.

**FIG. 7** is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

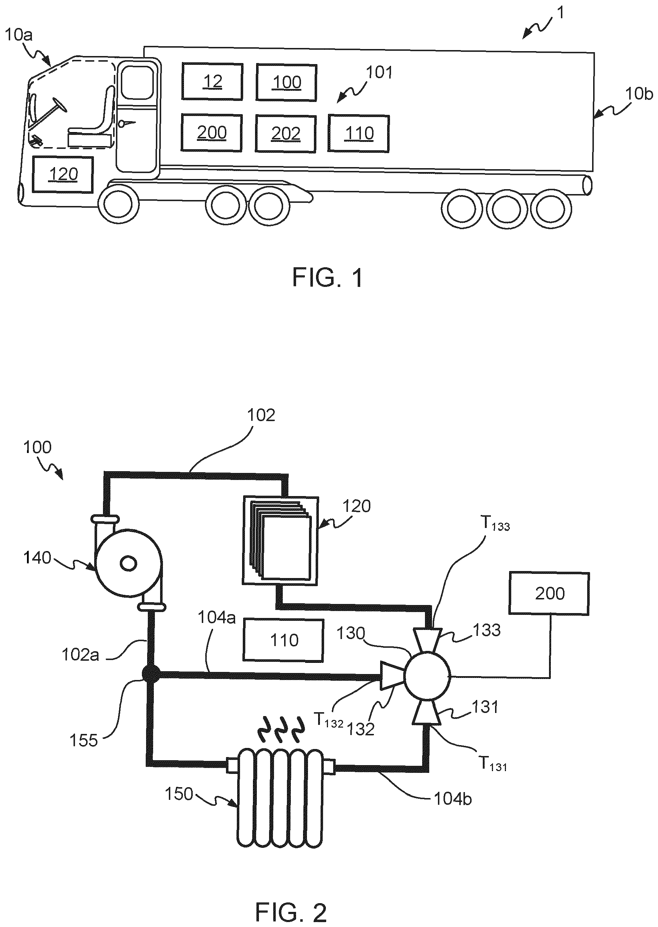

**FIG. 1** is an exemplary view of a vehicle **1** according to one example. The vehicle **1** comprises at least one fluid cooling system **100**. The at least one fluid cooling system **100** is configured to circulate coolant and to distribute heat flow to and from one or more components of the vehicle **1**, for example to and from one or more fuel cell systems **120**. The one or more fuel cell systems **120** may be located in a tractor **10a** and/or in a trailer **10b** of the vehicle **1**. The at least one fluid cooling system **100** is connected to, or forms part of, a fluid cooling control system **200**. The fluid cooling control system **200** is programmed to control the fluid cooling system **100**, as will be described further in the following.

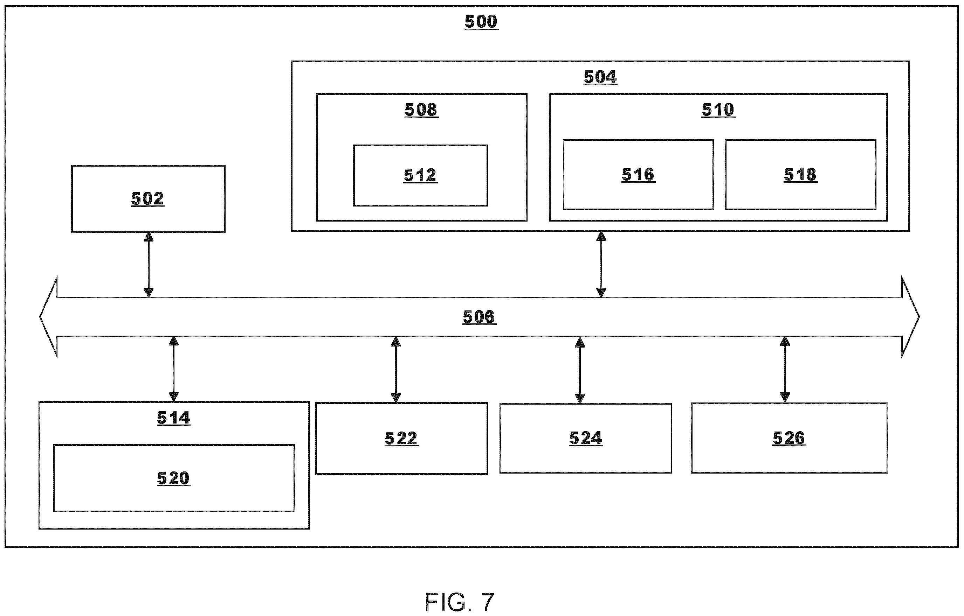

The vehicle **1** comprises, at least to some extent, processing circuitry **110** forming part of a computer system **101** (see further **FIG. 7**). The processing circuitry **110** is configured to implement the fluid cooling system **100**, which in turn is controlled by the fluid cooling control system **200**.

The vehicle **1** in **FIG. 1** comprises the computer system **101** and the fluid cooling control system **200**. The computer system **101** may be operatively connected to the fluid cooling control system **200**. The computer system **101** comprises processing circuitry **110**. The computer system **101** may comprise a storage device **12**, advantageously a non-volatile storage device such as a hard disk drives (HDDs), solid-state drives (SSDs) etc. In some examples, the storage device **12** is operatively connected to the computer system **101**. The fluid cooling control system **200** may comprise fluid cooling control system processing circuitry **202**; the fluid cooling control system processing circuitry **202** may be part of the processing circuitry **110** of the computer system **101**.

**FIG. 2** is an exemplary circuit of a fluid cooling system **100** according to an example. The fluid cooling system **100** is shown as comprising a cooling circuit **102** for a fuel cell system **120**. It should however be noted that this is one example only; the fluid cooling system **100** may be modified as will be further described below.

The cooling circuit **102** circulates cooling fluid using a pump **140**. Preferably, the pump **140** is electronically controlled such that the total flow through the cooling circuit **102** can be adjusted. The fluid cooling system **100** further comprises a radiator **150** and a bypass junction **155** arranged upstream the radiator **150**. Hence, by means of the bypass junction **155** the cooling circuit **102** is branched from a single conduit **102a** to a hot conduit **104a** and a cold conduit **104b** passing the radiator **150**. It should be noted that the bypass junction **155** may, as illustrated in **FIG. 2**, be a passive component or it may be an active components, such as a controllable valve.

The respective flow in the hot conduit **104a** and in the cold conduit **104b** may be determined by appropriate control of a mixing valve **130**. The mixing valve **130** is a fluid valve, preferably in the form of an electronically controlled three-way valve. The hot conduit **104a** is connected to a hot inlet **132** of the mixing valve **130**, while the cold conduit **104b** is connected to a cold inlet **131** of the same mixing valve **130**. The mixing valve **130** is configured to blend the flow from the hot and cold conduits **104a, 104b** at a flow ratio being dependent on the position of the mixing valve **130**. The combined flow will exit a mixing valve outlet **133** which returns the flow to pass the fuel cell system **120**.

In order to control the operation of the mixing valve **130**, and thereby the overall performance of the fluid cooling system **100**, the mixing valve **130** is mapped with regards to the flow ratio (i.e. the ratio between the flow in the hot conduit **104a** and the flow in the cold conduit **104b**) as a function of the valve position. A desired flow ratio can thus be obtained by querying the map for the resulting mixing valve position providing the desired flow ratio, and subsequent control of the mixing valve **130** to obtain this specific position. The mixing valve **130** is connected to, or forms part of, the fluid cooling control system **200**.

The mixing valve **130** is preferably controlled by the fluid cooling control system **200**. A movable body inside the valve **130** may be actuated and moved depending on the desired flow ratio, and the fluid cooling control system **200** is thus configured to control the position of the movable body of the mixing valve **130**. The fluid cooling control system **200** may preferably be implemented by the processing circuitry **110**.

In order to provide for the desired control of the fluid valve **130**, the fluid cooling system **100** comprises (or is connected to) a plurality of temperature sensors $S_{131}, S_{132}, S_{133}$. The temperature sensors $S_{131}, S_{132}, S_{133}$ are configured to provide corresponding temperature $T_{131}, T_{132}, T_{133}$. In the shown example a first temperature sensor $T_{131}$ is arranged in the cold conduit **104b** and the first temperature sensor $T_{131}$ is configured to provide temperature data for the flow in the cold conduit **104b**. Preferably, the first temperature sensor $T_{131}$ is arranged as close to the fluid valve **130** as possible. A second temperature sensor $T_{132}$ is arranged in the hot conduit **104a** and the second temperature sensor $T_{132}$ is configured to provide temperature data for the flow in the hot conduit **104a**. Preferably, also the second temperature sensor $T_{132}$ is arranged as close to the mixing valve **130** as possible. A third temperature sensor $T_{133}$ is arranged at the outlet port **133** of the mixing valve **130.** Optionally, in some examples the mixing valve **130** is positioned at the bypass junction **155.** This would also result in a combining junction downstream the radiator **150.** For such example, the temperature sensors $S_{131}$, $S_{132}$, $S_{133}$ are preferably still arranged downstream the radiator **150,** i.e. at the same positions as indicated in **FIG. 2.**

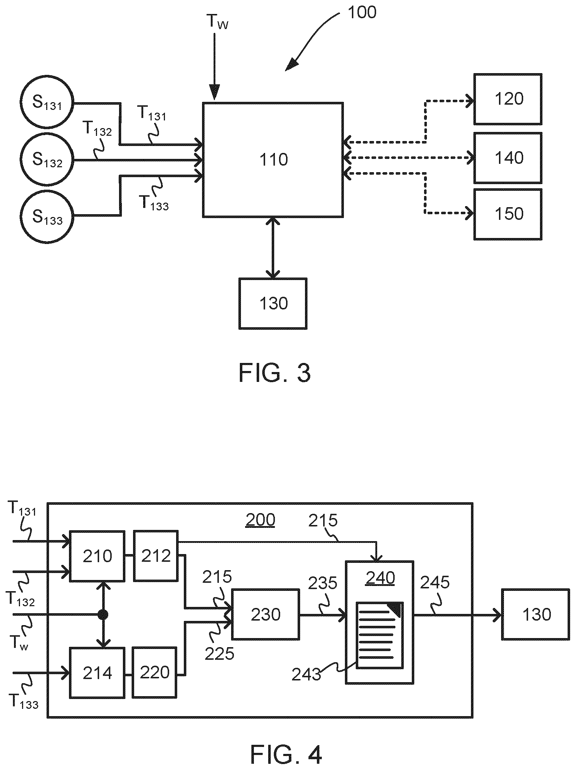

**FIG. 3** is an exemplary diagram of a fluid cooling system **100** according to an example. The processing circuitry **110,** which implements the fluid cooling control system **200,** is programmed to control the fluid valve **130** based on a predetermined wanted output temperature $T_w$ and obtained temperatures $T_{131}$, $T_{132}$, $T_{133}$. In particular, the fluid valve **130** is controlled to provide a desired flow ratio between the first input port **131** of the fluid valve **130** and the second input port **132** of the fluid valve **130.** The desired flow ratio is in turn achieved to provide a predetermined wanted output temperature $T_w$ at the output port **133** of the fluid valve **130.** As the coolant will flow to the fuel cell system **120,** accurate control of the coolant temperature (i.e. the temperature $T_{133}$ at the outlet port **133**) will improve operation and performance of the fuel cell system **120.** As is shown in **FIG. 3,** the processing circuitry **110** may be further configured to control operation of the pump **140,** the radiator **150,** and/or the fuel cell system **120.**

The processing circuitry **110,** implementing the fluid cooling control system **200,** thus obtains the first input temperature $T_{131}$ from the temperature sensor $S_{131}$ at the first input port **131** and the second input temperature $T_{132}$ from the temperature sensor $S_{132}$ at the second input port **132.** From these two temperatures, an open loop flow ratio **215** (see **FIG. 4**) between the first input port **131** and the second input port **132** is determined to provide the predetermined wanted output temperature $T_w$ at the output port **133.** Yet further, the processing circuitry **110** is configured to obtain the output temperature $T_{133}$ from the temperature sensor $S_{133}$ at the output port **133** and to determine a corrective closed loop flow ratio **225** based on the output temperature $T_{133}$ and the predetermined wanted output temperature $T_w$. The processing circuitry **110** is also configured to combine the open loop flow ratio **215** and the corrective closed loop flow ratio **225** to provide a combined flow ratio **235** (see **FIG. 4**) and to control a position of the fluid valve **130** based on the combined flow ratio **235.**

**FIG. 4** is an exemplary system diagram of a fluid cooling control system **200** according to an example. With reference to the description with regards to **FIG. 3,** the fluid cooling control system **200** comprises an input temperature obtainer **210.** The input temperature obtainer **210** is configured to obtain the first input temperature $T_{131}$ from the temperature sensor $S_{13}$, at the first input port **131** of the fluid valve **130** and the second input temperature $T_{132}$ from the temperature sensor $S_{132}$ at the second input port **132** of the fluid valve **130.** Optionally, the input temperature obtainer **210** may be configured to obtain the input temperatures $T_{131}$, $T_{132}$ in other suitable ways, e.g. by estimation.

The fluid cooling control system **200** further comprises a flow ratio determinator **212.** The flow ratio determinator **212** is configured to determine an open loop flow ratio between the first and second input ports **131, 132** of the fluid valve **130** based on the obtained input temperatures $T_{131}$, $T_{132}$. The input temperatures $T_{131}$, $T_{132}$ may e.g. be used by the flow ratio determinator **212** to calculate the percentage of cold coolant flow and hot coolant flow needed to get the desired target temperature at the outlet **133** of the fluid valve **130.** For example, if the input temperatures $T_{131}$, $T_{132}$ are 25°C and 75°C, respectively, while the predetermined wanted output temperature $T_w$ is 50°C, the flow ratio determinator **212** may determine the flow ratio to be 1: 1.

The valve position may be derived from the calculated open loop flow ratio **215** using a map **243.** The map **243** is preferably stored in a data storage **240,** such as a memory, and the map is formed by at least one table mapping flow ratio to valve position. The flow ratio may be linearized, i.e. the map essentially stores an approximated non-linear function of flow ratio vs valve position which permits to linearize the action of the valve position on the flow ratio.

Based on the determined flow ratio **215,** the fluid valve **130** is controlled by appropriate adjustment of the valve position.

The fluid cooling control system **200** further comprises an output temperature obtainer **214.** The output temperature obtainer **214** is configured to obtain the output temperature $T_{133}$ from the temperature sensor $S_{133}$ at the output port **133** of the fluid valve **130.**

The fluid cooling control system **200** further comprises a corrective closed loop flow ratio determinator **220.** The corrective closed loop flow ratio determinator **220** is configured to determine a corrective closed loop flow ratio **225** based on the predetermined wanted output temperature $T_w$ and the obtained output temperature $T_{133}$. For this, the corrective closed loop flow ratio determinator **220** may be implemented as a PID controller, used to fine tune the valve position using the output temperature $T_{133}$ as feedback.

As is further shown in **FIG. 4** the fluid cooling control system **200** comprises a combiner **230.** The combiner **230** is configured to combine the open loop flow ratio **215** and the corrective closed loop flow ratio **225** to a combined flow ratio **235.** The combined flow ratio **235,** which may be determined by the combiner **230** summing up the open loop flow ratio **215** and the corrective closed loop flow ratio **235,** can be used by the map **243** to return the associated fluid valve position.

Alternatively, the flow ratio determinator **212** is configured to determine an open loop flow ratio between the first and second input ports **131, 132** of the fluid valve **130** based on the obtained input temperatures $T_{131}$, $T_{132}$, as well as on the wanted outlet temperature $T_w$. If all three temperatures are known, the following equation applies:

$$\left(T_{cold\_inlet} \cdot \dot{m}_{cold\_inlet}\right) + \left(T_{hot\_inlet} \cdot \dot{m}_{hot\_inlet}\right) = \left(T_{outlet\_wanted} \cdot \dot{m}_{outlet}\right).$$

From this equation, the open loop flow ratio 215 can be calculated as:

$$Open\ loop\ flow\ ratio = \frac{T_{outlet\_wanted} - T_{hot\_inlet}}{T_{cold\_inlet} - T_{hot\_inlet}} = \frac{T_w - T_{132}}{T_{131} - T_{132}}.$$

As described above, fine tuning is performed by adding the corrective closed loop flow ratio 225 and providing the associated fluid valve position from the map 243.

The fluid cooling control system 200 may be configured to also control the pump 140, and thereby controlling the total flow in the fluid cooling system 100. Consequently, the map 243 may be multi-dimensional by storing a map of flow ratio vs valve position for multiple values of total flow and/or coolant temperature.

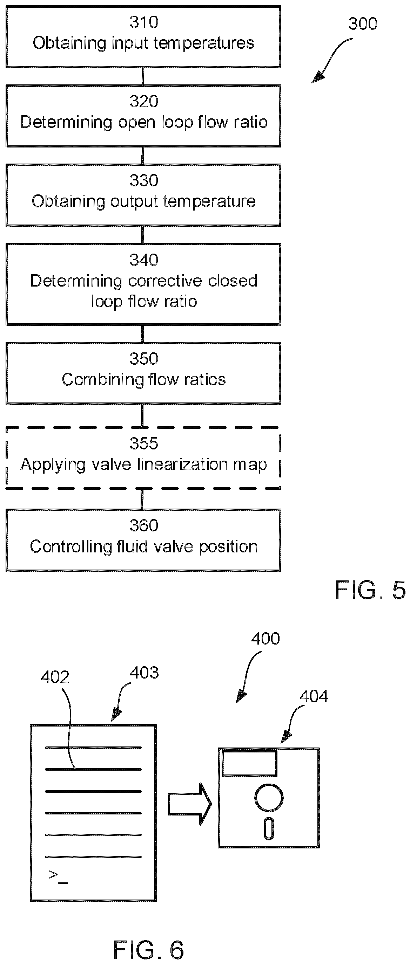

FIG. 5 is a flow chart of a method 300 of fluid cooling according to an example. The method 300 is performed by processing circuitry 110 of a computer system 101 for controlling a fluid cooling system 100 arranged to cool a fuel cell system 120, whereby the cooling system is operatively connected to processing circuitry 110 of a computer system 101. The fluid cooling system 100 comprises a fluid valve 130 arranged to control a flow ratio between a first a first input port 131 of the fluid valve 130 and a second input port 132 of the fluid valve 130 to provide a predetermined wanted output temperature $T_w$ at an output port 133 of the fluid valve 130 connected to the fuel cell system 120. The method 300 comprises repeatedly: obtaining 310, by the processing circuitry 110, a first input temperature $T_{131}$ at the first input port 131 and a second input temperature $T_{132}$ at the second input port 132. The method 300 further comprises determining 320, by the processing circuitry 110, an open loop flow ratio 215 between the first input port 131 and the second input port 132 based on the first input temperature $T_{131}$ and the second input temperature $T_{132}$ to provide the predetermined wanted output temperature $T_w$ at the output port 133. The method 300 further comprises obtaining 330, by the processing circuitry 110, an output temperature $T_{133}$ at the output port 133, and determining 340, by the processing circuitry 110, a corrective closed loop flow ratio 225 based on the output temperature $T_{133}$ and the predetermined wanted output temperature $T_w$. Yet further, the method 300 comprises combining 350, by the processing circuitry 110, the open loop flow ratio 215 and the corrective closed loop flow ratio 225 to provide a combined flow ratio 235. The combined flow ratio 235, which may be determined by summing up the open loop flow ratio 215 and the corrective closed loop flow ratio 235 as explained earlier, can optionally be used by in applying 355 valve linearization map to return the associated fluid valve position.

The method 300 further comprises controlling 360, by the processing circuitry 110, a position of the fluid valve 130 based on the combined flow ratio 235.

FIG. 6 is an exemplary diagram of a computer program product 400 according to an example. The computer program product 400 comprises instructions 403 represented by program code 402 for performing, when executed by processing circuitry 110, the computer implemented method 300 described with reference to FIG. 5. The instructions 403 may be stored on a non-transitory computer-readable storage medium 404.

FIG. 7 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a fluid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A fluid cooling system (**100**) for cooling a fuel cell system (**120**), the fluid cooling system (**100**) comprising processing circuitry (**110**), a fluid valve (**130**) arranged to control a flow ratio between a first input port (**131**) of the fluid valve (**130**), a second input port (**132**) of the fluid valve (**130**) to provide a predetermined wanted output temperature ($T_w$) at an output port (**133**) of the fluid valve (**130**) for connection to the fuel cell system (**120**), wherein the processing circuitry (**110**) is configured to repeatedly: obtain a first input temperature ($T_{131}$) at the first input port (**131**) and a second input temperature ($T_{132}$) at the second input port (**132**); determine an open loop flow ratio (**215**) between the first input port (**131**) and the second input port (**132**) based on the first input temperature ($T_{131}$) and the second input temperature ($T_{132}$) to provide the predetermined wanted output temperature ($T_w$) at the output port (**133**); obtain an output temperature ($T_{133}$) at the output port (**133**); determine a corrective closed loop flow ratio (**225**) based on the output temperature ($T_{133}$) and the predetermined wanted output temperature ($T_w$); combine the open loop flow ratio (**215**) and the corrective closed loop flow ratio (**225**) to provide a combined flow ratio (**235**); and control a position of the fluid valve (**130**) based on the combined flow ratio (**235**).

**Example 2:** The fluid cooling system (**100**) of Example 1, wherein providing the combined flow ratio (**235**) comprises: summing up the open loop flow ratio (**215**) and the corrective closed loop flow ratio (**225**).

**Example 3:** The fluid cooling system (**100**) of Example 1 or 2, wherein the open loop flow ratio (**215**) is greater than the closed loop flow ratio (**225**) such that the corrective closed loop flow ratio (**225**) provides fine-tuning to the output temperature ($T_{233}$).

**Example 4:** The fluid cooling system (**100**) of any one of Examples 1 to 3, wherein the corrective closed loop flow ratio (**215**) is determined by a PID controller (**220**) of the processing circuitry (**110**).

**Example 5:** The fluid cooling system (**100**) of any one of Examples 1 to 4, further comprising a fluid pump (**140**) arranged to control a flow rate of cooling fluid through the fuel cell system (**120**).

**Example 6:** The fluid cooling system (**100**) of Example 5, wherein the processing circuitry (**110**) is configured to control the fluid pump (**140**) to provide a configurable flow rate.

**Example 7:** The fluid cooling system (**100**) of any one of Examples 1 to 6, wherein the processing circuitry (**110**) is further configured to: linearize the combined flow ratio (**235**) based on a predetermined linearization map (**243**) of the fluid valve (**130**) to provide a linearized flow ratio (**245**); and control the position of the fluid valve (**130**) based on the linearized flow ratio (**245**).

**Example 8:** The fluid cooling system (**100**) of Example 7, wherein the linearization map (**243**) maps flow ratio to valve position.

**Example 9:** The fluid cooling system (**100**) of Examples 6 and 8, wherein the linearization map (**243**) comprise at least three dimensions and further maps flow rate to valve position.

**Example 10:** The fluid cooling system (**100**) of any one of Examples 1 to 9, wherein the output temperature ($T_{133}$) is provided by an output temperature sensor ($S_{133}$) of the fluid cooling system (**100**) located at the output port (**133**) of the fluid valve (**130**).

**Example 11:** The fluid cooling system (**100**) of any one of Examples 1 to 8, wherein the first input temperature ($T_{131}$) is provided by a first input temperature sensor ($S_{131}$) of the fluid cooling system (**100**) located at the first input port (**131**) of the fluid valve (**130**).

**Example 12:** The fluid cooling system (**100**) of any one of Examples 1 to 11, wherein the first input port (**131**) is an input port for a comparably cool fluid supply and the second input port (**132**) is an input port for a comparably hot fluid supply.

**Example 13:** The fluid cooling system (**100**) of Example 1, wherein providing the combined flow ratio (**235**) comprises summing up the open loop flow ratio (**215**) and the corrective closed loop flow ratio (**225**), wherein the open loop flow ratio (**215**) is greater than the closed loop flow ratio (**225**) such that the corrective closed loop flow ratio (**225**) provides fine-tuning to the output temperature ($T_{233}$), wherein the corrective closed loop flow ratio (**215**) is determined by a PID controller (**220**) of the processing circuitry (**110**), wherein the fluid cooling system further comprises a fluid pump (**140**) arranged to control a flow rate of cooling fluid through the fuel cell system (**120**), wherein the processing circuitry (**110**) is configured to control the fluid pump (**140**) to provide a configurable flow rate, wherein the processing circuitry (**110**) is further configured to: linearize the combined flow ratio (**235**) based on a predetermined linearization map (**243**) of the fluid valve (**130**) to provide a linearized flow ratio (**245**); and control the position of the fluid valve (**130**) based on the linearized flow ratio (**245**), wherein the linearization map (**243**) maps flow ratio to valve position, wherein the linearization map (**243**) comprises at least three dimensions and further maps flow rate to valve position, wherein the output temperature ($T_{133}$) is provided by an output temperature sensor ($S_{133}$) of the fluid cooling system (**100**) located at the output port (**133**) of the fluid valve (**130**), wherein the first input temperature ($T_{131}$) is provided by a first input temperature sensor ($S_{131}$) of the fluid cooling system (**100**) located at the first input port (**131**) of the fluid valve (**130**), wherein the first input port (**131**) is an input port for a comparably cool fluid supply and the second input port (**132**) is an input port for a comparably hot fluid supply, wherein the processing circuitry (**110**) is further configured to change the position of the fluid valve (**130**) when the obtained output temperature ($T_{133}$) differs from the predetermined wanted output temperature ($T_w$).

**Example 14:** A vehicle (**10**) comprising a fuel cell system (**120**) and the fluid cooling system (**100**) of any one of Examples 1 to 13 arranged to control a temperature of the fuel cell system (**120**).

**Example 15:** The vehicle (**10**) of Example 14, wherein the vehicle (**10**) is a heavy-duty vehicle.

**Example 16:** A computer implemented method (**300**) for controlling a fluid cooling system (**100**) arranged to cool a fuel cell system (**120**), the cooling system being operatively connected to processing circuitry (**110**) of a computer system (**101**) and comprises a fluid valve (**130**) arranged to control a flow ratio between a first a first input port (**131**) of the fluid valve (**130**), a second input port (**132**) of the fluid valve (**130**) to provide a predetermined wanted output temperature ($T_w$) at an output port **(133)** of the fluid valve **(130)** connected to the fuel cell system **(120)**, wherein the method **(300)** comprises repeatedly: obtaining **(310)**, by the processing circuitry **(110)**, a first input temperature $(T_{131})$ at the first input port **(131)** and a second input temperature $(T_{132})$ at the second input port **(132)**; determining **(320)**, by the processing circuitry **(110)**, an open loop flow ratio **(215)** between the first input port **(131)** and the second input port **(132)** based on the first input temperature $(T_{131})$ and the second input temperature $(T_{132})$ to provide the predetermined wanted output temperature $(T_w)$ at the output port **(133)**; obtaining **(330)**, by the processing circuitry **(110)**, an output temperature $(T_{133})$ at the output port **(133)**; determining **(340)**, by the processing circuitry **(110)**, a corrective closed loop flow ratio **(225)** based on the output temperature $(T_{133})$ and the predetermined wanted output temperature $(T_w)$; combining **(350)**, by the processing circuitry **(110)**, the open loop flow ratio **(215)** and the corrective closed loop flow ratio **(225)** to provide a combined flow ratio **(235)**; and controlling **(360)**, by the processing circuitry **(110)**, a position of the fluid valve **(130)** based on the combined flow ratio **(235)**.

**Example 17:** The computer implemented method **(300)** of Example 16, wherein providing **(350)** the combined flow ratio **(235)** comprises: summing up **(352)**, by the processing circuitry **(110)**, the open loop flow ratio **(215)** and the corrective closed loop flow ratio **(225)**.

**Example 18:** The computer implemented method **(300)** of Example 16 or 17, further comprising: linearizing **(354)**, by the processing circuitry **(110)**, the combined flow ratio **(235)** based on a predetermined linearization map **(243)** of the fluid valve **(130)** to provide a linearized flow ratio **(245)**; and controlling **(360)** the position of the fluid valve **(130)** based on the linearized flow ratio **(245)**.

**Example 19:** A computer program product **(400)** comprising program code **(402)** for performing, when executed by processing circuitry **(110)**, the computer implemented method **(300)** of any of Examples 16 to 18.

**Example 20:** A non-transitory computer-readable storage medium **(404)** comprising instructions **(402)**, which when executed by processing circuitry **(110)**, cause the processing circuitry **(110)** to perform the computer implemented method **(300)** of any of Examples 16 to 18.

**Example 21:** A computer system comprising processing circuitry configured to repeatedly:

obtain a first input temperature $(T_{131})$ at a first input port **(131)** and a second input temperature $(T_{132})$ at a second input port **(132)** of a fluid valve **(130)** arranged to control a flow ratio between the first input port **(131)** of the fluid valve **(130)** and the second input port **(132)** of the fluid valve **(130)** to provide a predetermined wanted output temperature $(T_w)$ at an output port **(133)** of the fluid valve **(130)**, wherein said fluid valve **(130)** forms part a fluid cooling system **(100)** for cooling a fuel cell system **(120)**;
determine an open loop flow ratio **(215)** between the first input port **(131)** and the second input port **(132)** based on the first input temperature $(T_{131})$ and the second input temperature $(T_{132})$ to provide the predetermined wanted output temperature $(T_w)$ at the output port **(133)**;
obtain an output temperature $(T_{133})$ at the output port **(133)**; determine a corrective closed loop flow ratio **(225)** based on the output temperature $(T_{133})$ and the predetermined wanted output temperature $(T_w)$;
combine the open loop flow ratio **(215)** and the corrective closed loop flow ratio **(225)** to provide a combined flow ratio **(235)**; and
control a position of the fluid valve **(130)** based on the combined flow ratio **(235)**.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A fluid cooling system **(100)** for cooling a fuel cell system (**120**), the fluid cooling system **(100)** comprising processing circuitry **(110)**, a fluid valve **(130)** arranged to control a flow ratio between a first input port **(131)** of the fluid valve **(130)** and a second input port **(132)** of the fluid valve **(130)** to provide a predetermined wanted output temperature $(T_w)$ at an output port **(133)** of the fluid valve **(130)** for connection to the fuel cell system (**120**), wherein the processing circuitry **(110)** is configured to repeatedly:

   obtain a first input temperature $(T_{131})$ at the first input port **(131)** and a second input temperature $(T_{132})$ at the second input port (**132**);
   determine an open loop flow ratio **(215)** between the first input port **(131)** and the second input port **(132)** based on the first input temperature $(T_{131})$ and the second input temperature $(T_{132})$ to provide the predetermined wanted output temperature $(T_w)$ at the output port (**133**);
   obtain an output temperature $(T_{133})$ at the output port (**133**);
   determine a corrective closed loop flow ratio **(225)** based on the output temperature $(T_{133})$ and the predetermined wanted output temperature $(T_w)$;
   combine the open loop flow ratio **(215)** and the corrective closed loop flow ratio **(225)** to provide a combined flow ratio **(235)**; and
   control a position of the fluid valve **(130)** based on the combined flow ratio **(235)**.

2. The fluid cooling system **(100)** of claim 1, wherein the processing circuitry is configured to provide the combined flow ratio **(235)** by being configured to:
   sum up the open loop flow ratio **(215)** and the corrective closed loop flow ratio **(225)**.

3. The fluid cooling system **(100)** of claim 1 or 2, wherein the open loop flow ratio **(215)** is greater than the corrective closed loop flow ratio **(225)** such that the corrective closed loop flow ratio **(225)** provides fine-tuning to the output temperature $(T_{233})$.

4. The fluid cooling system **(100)** of any one of claims 1 to 3, wherein the corrective closed loop flow ratio **(225)** is determined by a PID controller **(220)** of the processing circuitry **(110)**.

5. The fluid cooling system **(100)** of any one of claims 1 to 4, further comprising a fluid pump **(140)** arranged to control a flow rate of cooling fluid through the fuel cell system (**120**), wherein the processing circuitry **(110)** is configured to control the fluid pump **(140)** to provide a configurable flow rate.

6. The fluid cooling system **(100)** of any one of claims 1 to 5, wherein the processing circuitry **(110)** is further configured to:

   linearize the combined flow ratio **(235)** based on a predetermined linearization map **(243)** of the fluid valve **(130)** to provide a linearized flow ratio **(245)** as a function of valve position; and
   control the position of the fluid valve **(130)** based on the linearized flow ratio **(245)**.

7. The fluid cooling system **(100)** of claim 6, wherein the linearization map **(243)** comprises at least three dimensions and further maps flow rate to valve position.

8. The fluid cooling system **(100)** of any one of claims 1 to 7, wherein the output temperature $(T_{133})$ is provided by an output temperature sensor $(S_{133})$ of the fluid cooling system **(100)** located at the output port **(133)** of the fluid valve **(130)**.

9. The fluid cooling system (**100**) of any one of claims 1 to 8, wherein the first input temperature (**T$_{131}$**) is provided by a first input temperature sensor (**S$_{131}$**) of the fluid cooling system (**100**) located at the first input port (**131**) of the fluid valve (**130**), and/or wherein the second input temperature (**T$_{132}$**) is provided by a second input temperature sensor (**S$_{132}$**) of the fluid cooling system (**100**) located at the second input port (**132**) of the fluid valve (**130**).

10. The fluid cooling system (**100**) of any one of claims 1 to 9, wherein the first input port (**131**) is an input port for a first fluid supply and the second input port (**132**) is an input port for a second fluid supply, wherein the first fluid supply has lower temperature than the second fluid supply.

11. The fluid cooling system (**100**) of claim 1, wherein the processing circuitry is configured to provide the combined flow ratio (**235**) by being configured to sum up the open loop flow ratio (**215**) and the corrective closed loop flow ratio (**225**), wherein the open loop flow ratio (**215**) is greater than the closed loop flow ratio (**225**) such that the corrective closed loop flow ratio (**225**) provides fine-tuning to the output temperature (**T$_{233}$**), wherein the corrective closed loop flow ratio (**215**) is determined by a PID controller (**220**) of the processing circuitry (**110**), wherein the fluid cooling system further comprises a fluid pump (**140**) arranged to control a flow rate of cooling fluid through the fuel cell system (**120**), wherein the processing circuitry (**110**) is configured to control the fluid pump (**140**) to provide a configurable flow rate, wherein the processing circuitry (**110**) is further configured to: linearize the combined flow ratio (**235**) based on a predetermined linearization map (**243**) of the fluid valve (**130**) to provide a linearized flow ratio (**245**); and control the position of the fluid valve (**130**) based on the linearized flow ratio (**245**), wherein the linearization map (**243**) maps flow ratio to valve position, wherein the linearization map (**243**) comprises at least three dimensions and further maps flow rate to valve position, wherein the output temperature (**T$_{133}$**) is provided by an output temperature sensor (**S$_{133}$**) of the fluid cooling system (**100**) located at the output port (**133**) of the fluid valve (**130**), wherein the first input temperature (**T$_{131}$**) is provided by a first input temperature sensor (**S$_{131}$**) of the fluid cooling system (**100**) located at the first input port (**131**) of the fluid valve (**130**) and/or wherein the second input temperature (**T$_{132}$**) is provided by a second input temperature sensor (**S$_{132}$**) of the fluid cooling system (**100**) located at the second input port (**132**) of the fluid valve (**130**), wherein the first input port (**131**) is an input port for a first fluid supply and the second input port (**132**) is an input port for a second fluid supply, wherein the first fluid supply has lower temperature than the second fluid supply, wherein the processing circuitry (**110**) is further configured to change the position of the fluid valve (**130**) when the obtained output temperature (**T$_{133}$**) differs from the predetermined wanted output temperature (**T$_w$**).

12. A vehicle (**10**) comprising a fuel cell system (**120**) and the fluid cooling system (**100**) of any one of claims 1 to 11 arranged to control a temperature of the fuel cell system (**120**).

13. A computer implemented method (**300**) for controlling a fluid cooling system (**100**) arranged to cool a fuel cell system (**120**), the cooling system being operatively connected to processing circuitry (**110**) of a computer system (**101**) and comprising a fluid valve (**130**) arranged to control a flow ratio between a first a first input port (**131**) of the fluid valve (**130**), a second input port (**132**) of the fluid valve (**130**) to provide a predetermined wanted output temperature (**T$_w$**) at an output port (**133**) of the fluid valve (**130**) connected to the fuel cell system (**120**), wherein the method (**300**) comprises repeatedly:

obtaining (**310**), by the processing circuitry (**110**), a first input temperature (**T$_{131}$**) at the first input port (**131**) and a second input temperature (**T$_{132}$**) at the second input port (**132**);
determining (**320**), by the processing circuitry (**110**), an open loop flow ratio (**215**) between the first input port (**131**) and the second input port (**132**) based on the first input temperature (**T$_{131}$**) and the second input temperature (**T$_{132}$**) to provide the predetermined wanted output temperature (**T$_w$**) at the output port (**133**);
obtaining (**330**), by the processing circuitry (**110**), an output temperature (**T$_{133}$**) at the output port (**133**);
determining (**340**), by the processing circuitry (**110**), a corrective closed loop flow ratio (**225**) based on the output temperature (**T$_{133}$**) and the predetermined wanted output temperature (**T$_w$**);
combining (**350**), by the processing circuitry (**110**), the open loop flow ratio (**215**) and the corrective closed loop flow ratio (**225**) to provide a combined flow ratio (**235**); and
controlling (**360**), by the processing circuitry (**110**), a position of the fluid valve (**130**) based on the combined flow ratio (**235**).

14. A computer program product (**400**) comprising program code (**402**) for performing, when executed by processing circuitry (**110**), the computer implemented method (**300**) of claim 13.

15. A non-transitory computer-readable storage medium (**404**) comprising instructions (**403**), which when executed by processing circuitry (**110**), cause the processing circuitry (**110**) to perform the computer implemented method (**300**) of

claim 13.

FIG. 1

FIG. 2

$T_W$

100

$S_{131}$

$T_{132}$     $T_{131}$

$S_{132}$

110

120

140

150

$T_{133}$

$S_{133}$

130

## FIG. 3

$T_{131}$

200     215

210     212

215     235     240     245

230

$T_{132}$

130

$T_W$

225     243

214     220

$T_{133}$

## FIG. 4

310
Obtaining input temperatures

300

320
Determining open loop flow ratio

330
Obtaining output temperature

340
Determining corrective closed
loop flow ratio

350
Combining flow ratios

355
Applying valve linearization map

360
Controlling fluid valve position

FIG. 5

400

402    403

404

FIG. 6

FIG. 7

Europäisches
Patentamt
European
Patent Office
Office européen
des brevets

# EUROPEAN SEARCH REPORT

**Application Number**

EP 24 18 2609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/098782 A1 (NISSAN MOTOR [JP]) 15 June 2017 (2017-06-15) | 1,2,4,5, 8-10, 12-14 | INV. G05D23/13 F25B1/00 |
| A | * paragraphs [0008] - [0015]; figure 1 * ----- | 3,6,7,11 | H01M8/00 |
| A | US 2022/209265 A1 (WON JONG BO [KR] ET AL) 30 June 2022 (2022-06-30) * paragraphs [0059], [0060], [0047] * ----- | 1-15 | |

**TECHNICAL FIELDS SEARCHED (IPC)**

G05D

The present search report has been drawn up for all claims

| Place of search | Date of completion of the search | Examiner |
|---|---|---|
| Munich | 18 November 2024 | Polednicek, Milos |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 2609

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | Publication date | Patent family member(s) | | Publication date |
|---|---|---|---|---|
| WO 2017098782 A1 | 15-06-2017 | NONE | | |
| US 2022209265 A1 | 30-06-2022 | CN | 114695915 A | 01-07-2022 |
| | | EP | 4024539 A1 | 06-07-2022 |
| | | JP | 2022104859 A | 12-07-2022 |
| | | KR | 20220096151 A | 07-07-2022 |
| | | US | 2022209265 A1 | 30-06-2022 |

EPO FORM P0459

For more details about this annex : see Official Journal of the European Patent Office, No. 12/82